# EUROPEAN PATENT SPECIFICATION

(11) **EP 1 419 603 B1**
(45) Date of publication and mention of the grant of the patent: **23.03.2011**
(21) Application number: 02796397.4
(22) Date of filing: 21.08.2002
(51) Int. Cl.: H04B 7/216, H04L 1/18, H04L 1/00

(54) **METHOD FOR PHYSICAL LAYER AUTOMATIC REPEAT REQUEST FOR A BASE STATION**
VERFAHREN FUR AUTOMATISCHE WIEDERHOLUNGSANFORDERUNGEN DER PHYSIKALISCHEN SCHICHT FÜR EINE BASISSTATION
PROCEDE DE DEMANDE DE REPETITION AUTOMATIQUE DE COUCHE PHYSIQUE POUR UNE STATION DE BASE

(30) Priority: 24.08.2001 US 939410; 27.02.2002 US 84043
(43) Date of publication of application: 19.05.2004
(73) Proprietor: INTERDIGITAL TECHNOLOGY CORPORATION, Wilmington, DE 19801 (US)
(72) Inventor: KWAK, Joseph, A., Bolingbrook, IL 60440 (US)
(74) Representative: Bohnenberger, Johannes
(86) International application number: PCT/US2002/026591
(87) International publication number: WO 2003/019838

(56) References cited:
- EP-A2- 0 797 327
- EP-A2- 0 859 475
- WO-A-99/12303
- US-A- 5 280 498
- US-A- 5 544 196
- US-A- 5 657 325
- US-A- 6 049 549
- ERIKSSON S ET AL: "Comparison of link quality control strategies for packet data services in EDGE" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 938-942, XP010342128 ISBN: 0-7803-5565-2
- SAYEED Z: "Throughput analysis and design of fixed and adaptive ARQ/diversity systems for slow fading channels" GLOBAL TELECOMMUNICATIONS CONFERENCE, 1998. GLOBECOM 1998. THE BRIDGE TO GLOBAL INTEGRATION. IEEE SYDNEY,NSW,AUSTRALIA 8-12 NOV. 1998, PISCATAWAY, NJ, USA,IEEE, US, vol. 6, 8 November 1998 (1998-11-08), pages 3686-3691, XP010339471 ISBN: 0-7803-4984-9
- SHIOZAKI A ET AL: "A HYBRID ARQ SCHEME WITH ADAPTIVE FORWARD ERROR CORRECTION FOR SATELLITE COMMUNICATIONS" IEEE TRANSACTIONS ON COMMUNICATIONS, IEEE SERVICE CENTER, PISCATAWAY, NJ, US, vol. 39, no. 4, 1 April 1991 (1991-04-01), pages 482-484, XP000241258 ISSN: 0090-6778
- BAKHTIYARI S ET AL: "PRACTICAL IMPLEMENTATION OF A MOBILE DATA LINK PROTOCOL WITH A TYPE II HYBRID ARQ SCHEME AND CODE COMBINING" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, vol. CONF. 43, 18 May 1993 (1993-05-18), pages 774-777, XP000393297 ISBN: 0-7803-1267-8

## Description

### BACKGROUND

The present invention relates to wireless communication systems. More particularly, it relates to a modification to such systems by employing a physical layer (PHY) automatic repeat request (ARQ) scheme.

Proposed broadband fixed wireless access (BFWA) communication systems, using either single carrier-frequency domain equalization (SC-FDE) or orthogonal frequency division multiplex (OFDM) plan on using a high speed downlink packet access (HSDPA) application. This application will transmit downlink packet data at high speeds. In BFWA, a building or group of buildings are connected, either wirelessly or wired, and operate as a single subscriber site. The data demand for such a system is quite high for the single site's multiple end users requiring large bandwidths.

The current proposed system employs a layer 2 automatic repeat request (ARQ) system. Data blocks unsuccessfully transmitted to the subscribers are buffered and retransmitted from layer 2. The data blocks stored in layer 2 are typically large, are transmitted for high signal to noise ratio (SNR) reception, are received with a low block error rate (BLER), and are infrequently retransmitted. Additionally, layer 2 ARQ signaling is typically slow requiring large buffers and long retransmission intervals.

Accordingly, it is desirable to have alternatives in addition to a layer 2 ARQ system.
WO 99/12303A relates to error handling using ARQ in digital communication systems that support multiple forward error correction (FEC) coding and / or modulation schemes.

### SUMMARY

The method of the invention comprises a plurality of steps at a base station transmitter, to receive data and format the received data into packets having a particular encoding/data modulation. The transmitter retransmits packets in response to not receiving a corresponding acknowledgment for a given packet. An adaptive modulation and coding controller in the transmitter collects retransmission statistics and adjusts the particular encoding/data modulations using the collected statistics and the packets are transmitted using OFDMA and selective nulling of subchannels in an OFDMA set is performed in addition to the FEC and modulation adjusting.

### BRIEF DESCRIPTION OF THE DRAWINGS

Figures 1a and 1b are simplified block diagrams of downlink and uplink physical ARQs.

Figure 2 is a flow chart for using retransmission statistics for adaptive modulation and coding.

Figure 3 is block diagram showing a multi-channel stop and wait architecture.

### DETAILED DESCRIPTION OF THE PREFERRED EMBODIMENTS

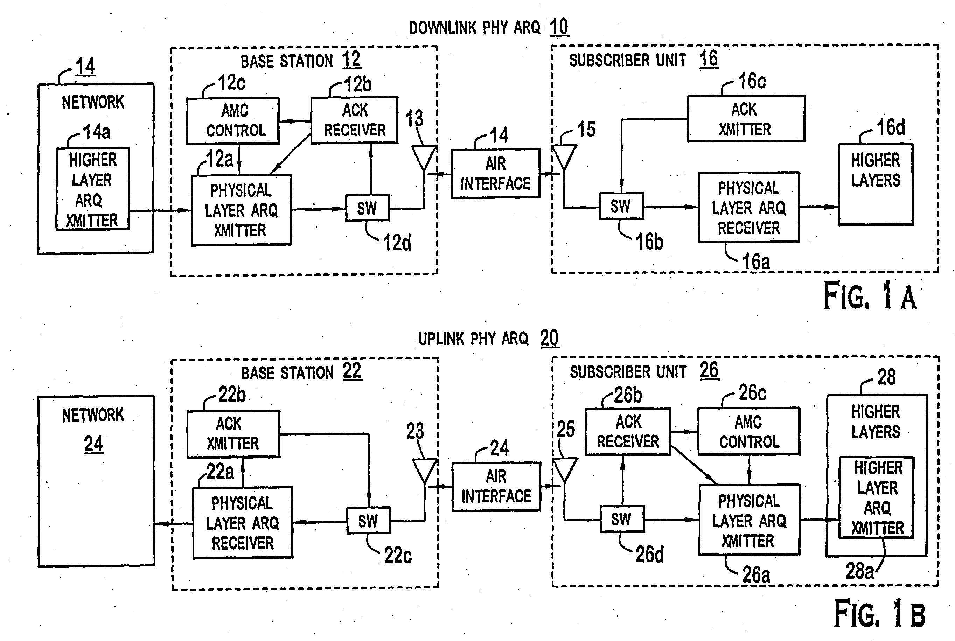

Figures 1a and 1b respectively show a downlink physical ARQ 10 and uplink physical ARQ 20.

The downlink physical ARQ 10 comprises a base station 12 receiving packets from the higher layer ARQ transmitter 14a provided in network 14. The packets from transmitter 14a are applied to the physical layer ARQ transmitter 12a in base station 12. The ARQ transmitter 12a encodes the data with a forward error correcting code (FEC), appends error check sequences (ECSs), modulates the data as directed by the adaptive modulation and coding (AMC) controller 12c, such as by using binary phase shift keying (BPSK), quadrature phase shift keying (QPSK) or m-ary quadrature amplitude modulation (i.e. 16-QAM or 64-QAM). Additionally, for orthogonal frequency division multiple access (OFDMA), the AMC controller 12a may vary the subchannels used to carry the packet data. The physical layer ARQ transmitter 12a transmits packets to the subscriber unit 16 through air interface 14 by way of switch, circulator or duplexor 12d and antenna 13. The transmitter 12a also temporarily stores the message for retransmission, if necessary, in a buffer memory incorporated in the transmitter 12a.

Antenna 15 of subscriber unit 16 receives the packet. The packet is input into physical layer ARQ receiver 16a through switch, circulator or duplexor 16b. At the receiver 16a, the packet is FEC decoded and checked for errors using the ECS. The receiver 16a then controls acknowledgment transmitter 16c to either acknowledge (ACK) receipt of a packet with an acceptable error rate or to request retransmission by, preferably, withholding an acknowledgment signal or transmitting a negative acknowledgment (NAK).

The ACK is sent by ACK transmitter 16c to the base station 12 through switch 16b and antenna 15. The ACK is sent via the air interface 14 to antenna 13 of base station 12. The received ACK is processed by an acknowledgment receiver 12b in the base station. The ACK receiver 12b delivers the ACK/NAKs to the adaptive modulation and coding (AMC) controller 12c and to the transmitter 12a. The AMC controller 12c analyzes the channel quality to the subscriber unit 16 using statistics of the received ACKs and may vary the FEC encoding and modulation techniques of subsequent transmissions of the message, as will be described in more detail. If the subscriber unit 16 acknowledges receipt of the packet, receipt of this ACK at base station 12 causes the original packet, which was temporarily stored in a buffer memory, to be cleared in readiness for the next packet.

If no ACK is received or a NAK is received, the physical layer transmitter 12a retransmits the original message or selectively modified version of the original message to subscriber 16. At the subscriber unit 16, the retransmission is combined with the original transmission, if available. This technique facilitates receipt of a correct message by use of data redundancy or selective repeat combining. The packets having an acceptable error rate are transferred to higher layers 16d for further processing. The acceptable received packets are delivered to the higher layers 16d in the same data order in which the data was provided to transmitter 12a in the base station (i.e. in-sequence delivery). The maximum number of retransmissions is limited to an operator-defined integer value, such as in the range of 1 to 8. After the maximum number of retransmissions are attempted, the buffer memory is cleared for use by the next packet. Decoding an acknowledgment using small packets at the physical layer reduces transmission delays and message handling time.

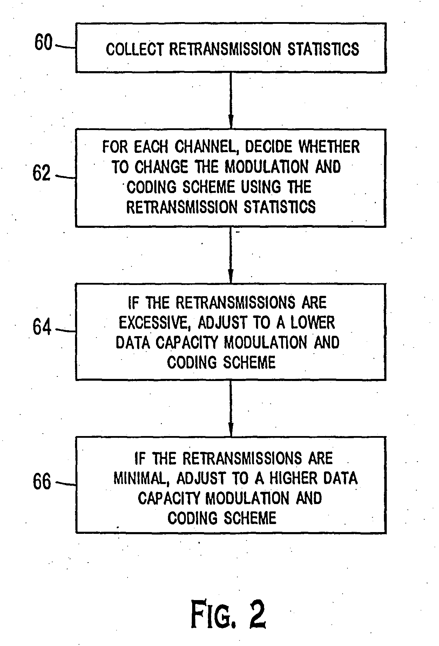

Since PHY ART occurs at the physical layer, the number of retransmission occurrences for a particular channel, retransmission statistics, is a good measure of that channel's quality. Using the retransmission statistics, the AMC controller 12c may vary the modulation and coding schemes for that channel, as shown in Figure 2. Additionally, the retransmission statistics can also be combined with other link quality measurements, such as bit error rates (BERs) and block error rates (BLERs), by the AMC controller 12c to gauge the channel quality and determine whether a change in the modulation and coding scheme is required.

To illustrate for SC-FDE, the retransmission occurrences for a particular channel are measured to produce retransmission statistics, (60). A decision on whether to change the modulation scheme is made using the retransmission statistics, (62). If the retransmissions are excessive, a more robust coding and modulation scheme is used, (64), usually at a reduced data transfer rate. The AMC controller 12c may increase the spreading factor and use more codes to transfer the packet data. Alternately or additionally, the AMC controller may switch from a high data throughput modulation scheme to a lower one, such as from 64-QAM to 16-QAM or QPSK. If the rate of retransmissions is low, a switch to a higher capacity modulation scheme is made, such as from QPSK to 16-ary QAM or 64-ary QAM, (66). The decision preferably uses both the retransmission rate and other link quality measurements signaled from the receiver, such as BER or BLER, (62). The decision limits are preferably set by the system operator.

For OFDMA, the retransmission occurrences are used to monitor the channel quality of each subchannel. If the retransmission rate or retransmission rate/link quality for a particular subchannel indicates poor quality, that subchannel is selectively nulled from the OFDM frequency set, (64), in order to preclude use of such poor quality subchannels for some future period. If the retransmission rate or retransmission rate/link quality indicates high quality, a previously nulled subchannels may be added back to the OFDM frequency set, (66).

Using the retransmission occurrences as a basis for AMC provides a flexibility to match the modulation and coding scheme to the average channel conditions for each user. Additionally, the retransmission rate is insensitive to measurement error and reporting delay from the subscriber unit 16.

The uplink ARQ 20 is similar in nature to the downlink ARQ 10 and is comprised of a subscriber unit 26 in which packets from a higher layer ARQ transmitter 28a of the higher layers 28 are transferred to physical layer ARQ transmitter 26a. The message is transmitted to the base station antenna through switch 26d, subscriber antenna 25 and air interface 24. The AMC controller, likewise, may vary the modulation and coding scheme using the retransmission statistics of a channel.

Physical layer ARQ receiver 22a, similar to receiver 16a of Figure 1a, determines if the message has an acceptable error rate requiring retransmission. The acknowledgment transmitter reports status to subscriber unit 26, causing the transmitter 26a to retransmit or alternatively to clear the original message temporarily stored at transmitter 26a in readiness to receive the next message from the higher layers 28. Successfully received packets are sent to the network 24 for further processing.

Although not shown for purposes of simplicity, the system is preferably used for a HSDPA application in a BFWA system, although other implementations may be used. The BFWA system may use frequency division duplex or time division duplex SC-FDE or OFDMA. In such a system, the base station and all of the subscribers are in fixed locations. The system may comprise a base station and a large number of subscriber units. Each subscriber unit may serve multiple users within one building or several neighboring buildings, for example. These applications typically require a large bandwidth due to the large number of end users at one subscriber unit site.

A PHY ARQ deployed in such a system is transparent to the higher layers, such as the medium access controllers (MACs). As a result, PRYARQ can be used in conjunction with higher layer ARQs, such as layer 2. In such cases, the PHY ARQ reduces the retransmission overhead of the higher layer ARQs.

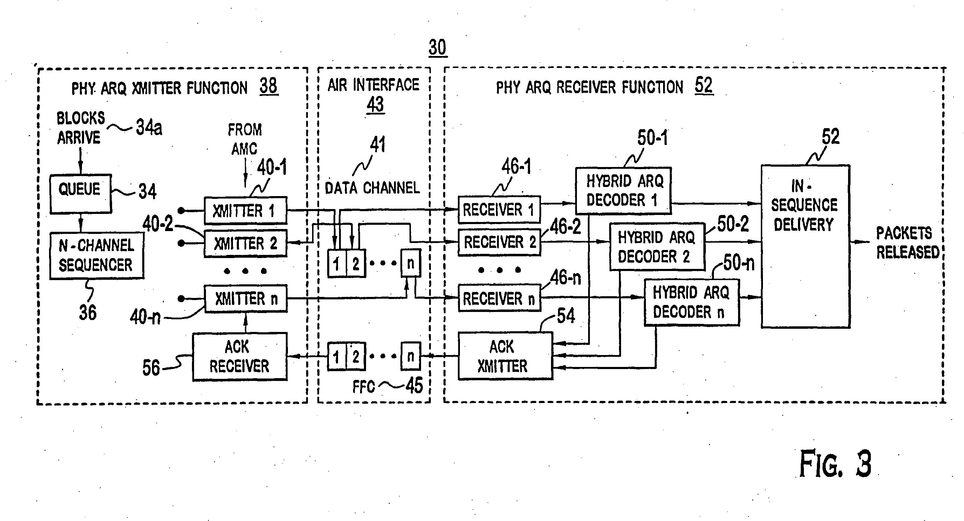

Figure 3 is an illustration of an N-channel stop and wait architecture for a PHYARQ 30. The Physical Layer ARQ transmit function 38 may be located at the base station, subscriber unit or both depending on whether downlink, uplink or both PHYARQs are used. Blocks 34a of data arrive from the network. The network blocks are placed in a queue 34 for transmission over the data channel 41 of the air interface 43. An N-channel sequencer 36 sends data of the blocks sequentially to the N transmitters 40-1 to 40-n. Each transmitter 40-1 to 40-n is associated with a transmit sequence in the data channel 41. Each transmitter 40-1 to 40-n FEC encodes and provides ECS for the block data to produce packets for AMC modulation and transmission in the data channel 41. The FEC encoded/ECS data is stored in a buffer of the transmitter 40-1 to 40-n for possible retransmission. Additionally, control information is sent from the PHYARQ transmitter 38 to synchronize reception, demodulation and decoding at the receivers 46-1 to 46-n.

Each of the N receivers 46-1 to 46-n receives the packet in its associated timeslot. The received packet is sent to a respective hybrid ARQ decoder 50-1 to 50-n (50). The hybrid ARQ decoder 50 determines the error rate, such as BER or BLER, for the received packet. If the packet has an acceptable error rate, it is released to the higher levels for further processing and an ACK is sent by the ACK transmitter 54. If the error rate is unacceptable or no packet was received, no ACK is sent or a NAK is sent. Packets with unacceptable error rates are buffered at the decoder 50 for potential combining with a retransmitted packet.

One approach for combining packets using turbo codes is as follows. If a turbo encoded packet is received with an unacceptable error rate, the packet data is retransmitted to facilitate code combining. The packet containing the same data is encoded differently. To decode the packet data, both packets are processed by the turbo decoder to recover the original data. Since the second packet has a different encoding, its soft symbols are mapped to different points in the decoding scheme. Using two packets with different encoding adds coding diversity and transmission diversity to improve the overall BER. In another approach, the identical signal is transmitted. The two received packets are combined using a maximum ratio combining of symbols. The combined signal is subsequently decoded.

The ACK for each receiver 46-1 to 46-n is sent in a fast feedback channel (FFC) 45. The fast feedback channel 45 is preferably a low latency channel. For a time division duplex system, the ACKs may be sent in idle periods between upstream and downstream transmissions. The FFC 45 is preferably a low speed, high bandwidth CDMA channel overlaying other in-band transmissions. The FFC CDMA codes and modulations are selected to minimize interference to other in-band transmissions. To increase the capacity of such a FFC 45, multiple codes may be used.

The ACK receiver 56 detects the ACKs and indicates to the corresponding transmitter 40-1 to 40-n whether the ACK was received. If the ACK was not received, the packet is retransmitted. The retransmitted packet may have a different modulation and coding scheme as directed by the AMC controller 12c, 26c. If the ACK is received, the transmitter 40-1 to 40-n clears the previous packet from the buffer and accepts a subsequent packet for transmission.

The number of transmitters and receivers N is based on various design considerations, such as the channel capacity and ACK response time. For the preferred system previously described, a 2-channel architecture is preferably utilized, with even and odd transmitters and receivers.

The PHY ARQ technique of the preferred embodiment provides a 7 db gain in signal to noise ratio (SNR) as compared to a system using only higher layer ARQ. This occurs by operating at higher block error rates (BLERs) (5-20% BLER) and using smaller block sizes for layer 1 than is practical with higher layer ARQ alone. The decreased SNR requirement allows for: increased capacity by switching to high order modulation employing an adaptive modulation and coding (AMC) technique; lower customer premise equipment (CPE) costs by using lower grade RF (radio frequency) components with the PHY ARQ compensating for reduced implementation performance; increased downlink range which extends the cell radius; reduced downlink power in the base station (BS) to minimize cell-cell interference; and increased power amplifier (PA) back-off when employing a multi-carrier technique.

## Claims

1. A method for adjusting data modulation at a base station comprising:
receiving data at a transmitter for transmission;
formatting the received data into packets for transmission, each packet having a particular type of encoding and data modulation;
transmitting the packets;
monitoring a return channel for receipt of an acknowledgment for each packet that the packet has been received;
retransmitting a packet at the transmitter, if an acknowledgment for that packet has not been received;
collecting retransmission statistics by collecting the number of retransmission occurrences; and
adjusting each particular type of encoding and data modulation using the collected retransmission statistics,
wherein the particular type of encoding and data modulation is forward error correction, hereafter referred to as FEC,
the method **characterized in that**:
- the packets are transmitted using an orthogonal frequency division multiple access, hereafter referred to as OFDMA, air interface and that, in addition to the particular FEC encoding and data modulation adjusting selective nulling of subchannels of poor quality in an OFDMA set is performed.

2. The method of claim 1, wherein the packets are transmitted using a single carrier having a frequency domain equalization, hereafter referred to as SC-FDE, air interface.

3. The method of claim 1, wherein the return channel is the fast feedback channel when the packets are transmitted using a code division multiple access, hereafter referred to as CDMA, air interface.

4. The method of claim 1, further comprising:
identifying a packet as having an unacceptable error rate responsive to receipt of a negative acknowledgment.

5. The method of claim 1, comprising:
formatting data into packets for transmission over a wireless air interface;
receiving packets of data over said air interface, each packet having a particular encoding and data modulation;
for each received packet, generating and transmitting a positive acknowledgment at the physical layer of said air interface when a received packet has an acceptable error rate.

6. The method of claim 5, wherein the positive acknowledgments are transmitted on the fast feedback channel when said air interface is a code division multiple access.

7. The method of claim 5, further comprising transmitting a negative acknowledgment if that packet has an unacceptable error rate.

## Patentansprüche

1. Verfahren zum Einstellen einer Datenmodulation an einer Basisstation, Folgendes umfassend:
Empfangen von Daten an einem Sender zur Übertragung;
Formatieren der empfangenen Daten zu Paketen zur Übertragung, wobei jedes Paket eine besondere Codier- und Datenmodulationsart aufweist;
Übertragen der Pakete;
Überwachen eines Rückkanals auf einen Empfang einer Rückmeldung für jedes Paket hin, dass das Paket empfangen wurde;
wiederholtes Übertragen eines Pakets am Sender, falls keine Rückmeldung für das Paket empfangen wurde;
Erfassen von Übertragungswiederholungs-Statistikdaten durch Erfassen der Anzahl von Übertragungswiederholungsereignissen; und
Einstellen jeder besonderen Codier- und Datenmodulationsart unter Verwendung der erfassten Übertragungswiederholungs-Statistikdaten,
wobei es sich bei der besonderen Codier- und Datenmodulationsart um Vorwärtsfehlerkorrektur handelt, im Folgenden als FEC bezeichnet,
wobei das Verfahren **dadurch gekennzeichnet ist, dass**:
- die Pakete unter Verwendung einer Orthogonalfrequenzvielfachzugriff-Luftschnittstelle übertragen werden, im Folgenden als OFDMA-Luftschnittstelle bezeichnet, und dass zusätzlich zur Einstellung der besonderen FEC-Codierung und -Datenmodulation ein selektiver Nullabgleich von Unterkanälen mit schlechter Qualität in einem OFDMA-Satz erfolgt.

2. Verfahren nach Anspruch 1, wobei die Pakete unter Verwendung eines einzelnen Trägers übertragen werden, der über eine Frequenzbereichsentzerrungs-Luftschnittstelle verfügt, im Folgenden als SC-FDE-Luftschnittstelle bezeichnet.

3. Verfahren nach Anspruch 1, wobei es sich bei dem Rückkanal um einen Schnellrückkopplungskanal handelt, wenn die Pakete unter Verwendung einer Codevielfachzugriff-Luftschnittstelle übertragen werden, im Folgenden als CDMA-Luftschnittstelle bezeichnet.

4. Verfahren nach Anspruch 1, darüber hinaus umfassend:
Identifizieren eines Pakets als eine inakzeptable Fehlerrate aufweisend im Ansprechen auf den Empfang einer negativen Rückmeldung.

5. Verfahren nach Anspruch 1, Folgendes umfassend:
Formatieren von Daten zu Paketen zur Übertragung über eine drahtlose Luftschnittstelle;
Empfangen von Datenpaketen über die Luftschnittstelle, wobei jedes Paket eine besondere Codierung und Datenmodulation hat;
Generieren und Übertragen einer positiven Rückmeldung für jedes empfangene Paket an der physikalischen Schicht der Luftschnittstelle, wenn ein empfangenes Paket eine akzeptable Fehlerrate hat.

6. Verfahren nach Anspruch 5, wobei die positiven Rückmeldungen im Schnellrückkopplungskanal übertragen werden, wenn es sich bei der Luftschnittstelle um einen Codevielfachzugriff handelt.

7. Verfahren nach Anspruch 5, darüber hinaus das Übertragen einer negativen Rückmeldung umfassend, falls das Paket eine inakzeptable Fehlerrate hat.

## Revendications

1. Procédé de réglage de modulation de données au niveau d'une station de base, comportant :
la réception de données au niveau d'un transmetteur pour transmission ;
le formatage des données reçues en paquets pour transmission, chaque paquet ayant un type particulier de codage et de modulation de données ;
la transmission des paquets ;
le suivi d'un canal de retour pour réception d'un accusé de réception pour chaque paquet, confirmant que le paquet a été reçu ;
retransmission d'un paquet au niveau du transmetteur si un accusé de réception pour ce paquet n'a pas été reçu ;
collecte de statistiques de retransmission via la collecte du nombre de cas de retransmission ; et
réglage de chaque type particulier de codage et de modulation de données moyennant les statistiques de retransmission collectées,
le type particulier de codage et de modulation de données étant à correction d'erreurs sans voie de retour, ci-après désignée FEC,
le procédé étant **caractérisé en ce que** :
les paquets sont transmis via une interface hertzienne à accès multiple par répartition orthogonale en fréquence, ci-après désigné OFDMA, et **en ce que**, en plus du réglage particulier de codage et de modulation de données FEC, une mise à zéro sélective de sous-canaux de mauvaise qualité dans un ensemble OFDMA est réalisée.

2. Le procédé de la revendication 1, où les paquets sont émis via une mono- porteuse à interface hertzienne à égalisation du domaine fréquentiel, ci-après désignée SC-FDE.

3. Le procédé de la revendication 1, où le canal de retour est un canal de rétroaction rapide si les paquets sont transmis via une interface hertzienne à accès multiple par répartition en code, ci-après désigné CDMA.

4. Le procédé de la revendication 1, comportant en outre :
l'identification d'un paquet comme ayant un taux d'erreur inadmissible en réaction à la réception d'un accusé de réception négatif.

5. Le procédé de la revendication 1, comportant :
le formatage de données en paquets pour transmission via une interface hertzienne sans fil ;
la réception de paquets de données via ladite interface hertzienne, chaque paquet ayant un codage et une modulation de données particuliers ;
pour chaque paquet reçu, la production et la transmission d'un accusé de réception positif sur la couche physique de ladite interface hertzienne si un paquet reçu a un taux d'erreur admissible.

6. Le procédé de la revendication 5, où les accusés de réception positifs sont transmis sur le canal de rétroaction rapide si ladite interface hertzienne est à accès multiple par répartition en code.

7. Le procédé de la revendication 5, comportant en outre la transmission d'un accusé de réception négatif si ce paquet a un taux d'erreur inadmissible.
